Europäisches Patentamt

European Patent Office

Office européen des brevets

(19)

(11) Numéro de publication: **0 190 544**
**A2**

(12)

# DEMANDE DE BREVET EUROPEEN

(21) Numéro de dépôt: **85870201.2**

(22) Date de dépôt: **30.12.85**

(51) Int. Cl.⁴: **G 06 F 3/00**

(30) Priorité: **28.12.84 ES 539209**

(43) Date de publication de la demande:
**13.08.86 Bulletin 86/33**

(84) Etats contractants désignés:
**AT BE CH DE FR GB IT LI LU NL SE**

(71) Demandeur: **Rovira, Jorge Garcia**
**Rocafort 118-120, 3, 1a**
**E-08015 Barcelona(ES)**

(71) Demandeur: **De Guzman Velasquez, Manuel Rodriquez**
**Alcala 229**
**E-28028 Madrid(ES)**

(72) Inventeur: **Rovira, Jorge Garcia**
**Rocafort 118-120, 3, 1a**
**E-08015 Barcelona(ES)**

(72) Inventeur: **De Guzman Velasquez, Manuel Rodriquez**
**Alcala 229**
**E-28028 Madrid(ES)**

(74) Mandataire: **Kellens, Georges E.**
**c/o BUGNION S.A. rue de Namur 43 -Bte 3**
**B-1000 Bruxelles(BE)**

(54) **Système de traitement digital et d'affichage d'images.**

(57) La présente invention se réfère, comme l'indique l'énoncé de ce mémoire descriptif, à un système de traitement
digital et d'affichage d'images utilisant un circuit de combinaison originale qui permet aussi bien la digitalisation de
l'image provenant d'une caméra vidéo et sa traduction en
une information digitale, lisible par un ordinateur, que
l'écriture d'une image envoyée par l'ordinateur à ce circuit
pour réaliser ainsi son affichage sur un moniteur de télévision.

EP 0 190 544 A2

Système de traitement digital et d'affichage d'images

La présente invention se réfère, comme l'indique l'énoncé de ce mémoire descriptif, à un système de traitement digital et d'affichage d'images utilisant un circuit de combinaison originale qui permet aussi bien la digitalisation de l'image provenant d'une caméra vidéo et sa traduction en une information digitale, lisible par un ordinateur, que l'écriture d'une image envoyée par l'ordinateur à ce circuit pour réaliser ainsi son affichage sur un moniteur de télévision.

Il existe actuellement plusieurs systèmes commercialisés qui permettent de convertir des images provenant d'une caméra basée sur un tube électronique sensible, genre vidicon, en une information binaire accessible à partir d'un commutateur, leur traitement informatique et affichage postérieur.

Le système ici représenté est tout particulièrement indiqué pour la saisie, le traitement, la compréhension et l'affichage d'éléments classiques tels que marques classiques, signatures, schémas et diagrammes. Son utilisation couvre le domaine de l'industrie, de la banque, en ce qui concerne la capacité de traiter et de stocker des signatures et, pour la même raison, des entreprises de sécurité ou autres similaires.

Le système préconisé se base sur un circuit permettant à la fois la digitalisation d'images et l'affichage d'une image digitale lue par un ordinateur. Les données digitales en quoi est convertie l'image graphique au moyen du digitaliseur sont lues par un ordinateur à l'aide d'un programme de lecture. L'image sous forme digitale peut être traitée par un programme permettant l'élimination des bruits.

L'image sous forme digitale peut en outre être traitée par un programme qui augmente la qualité ou définition de l'image au cas où l'état de l'original soit déficient. Une fois que les images sont jugées correctes, on les comprime au moyen d'un programme faisant que l'occupation ou encombrement de l'image dans le moyen magnétique de stockage de l'ordinateur soit d'un demi à un seizième de la dimension de la propre image non comprimée, permettant ainsi une économie fondamentale d'occupation ou encombrement dans ledit moyen de stockage.

Les images traitées et comprimées sont classées avec un index pour en faciliter la recherche et c'est ainsi qu'au cas où l'on désire afficher une image stockée, on récupère celle-ci et, à l'aide d'un programme d'ordinateur, on la décomprime en lui rendant sa forme originale et on procède à son affichage sur le circuit d'affichage précité.

Le système complet comprend un circuit de digitalisation et d'affichage; un traitement informatique pour la lecture par un ordinateur de l'information digitale en quoi s'est convertie l'image au moyen du circuit digitaliseur; un traitement informatique pour l'extraction des points de l'image pouvant produire une dénaturation de celle-ci, tels que salissures sur le papier support ou coloration sur le papier.

Un traitement informatique pour l'amélioration et contraste de l'image au cas où l'original manque de définition.

Un traitement informatique de classement, archivage, indexation, recherche, localisation, décompression et postérieur affichage de l'image sur un moniteur standard à écran de tube de rayons cathodiques et un traitement informatique de décompression pour rendre à l'image sa forme originelle et permettre ainsi son affichage sur un circuit de sortie.

Tous les traitements informatiques décrits sont introduits comme réalisation pratique d'un langage permettant une exécution rapide pour que les temps mis pour tous soient adaptés à la grande rapidité de travail du système de digitalisation et d'affichage. C'est pourquoi tous les traitements sont introduits dans un assembleur utilisant des systèmes d'une grande effectivité.

Pour compléter la présente description et afin de mieux faire comprendre les caractéristiques de l'invention, l'on joint au présent mémoire descriptif un ensemble de plans faisant partie intégrante de celui-ci, sur lesquels ont été représentées, à titre d'illustration non limitatif, quatre figures correspondant aux quatre circuits constituant le système de traitement digital et d'affichage d'images.

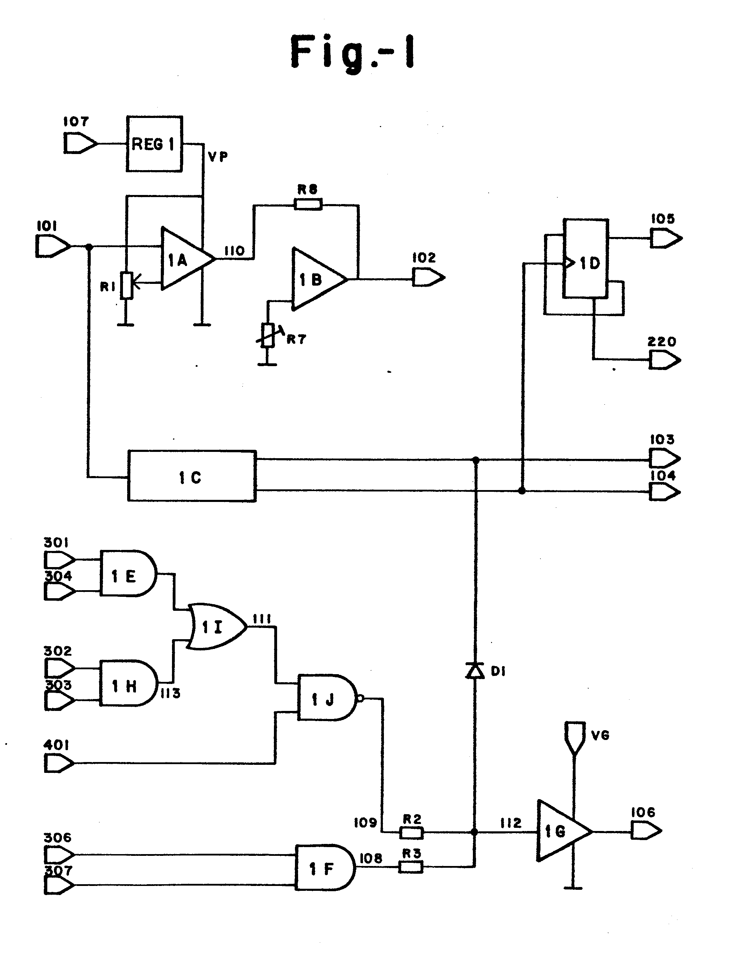

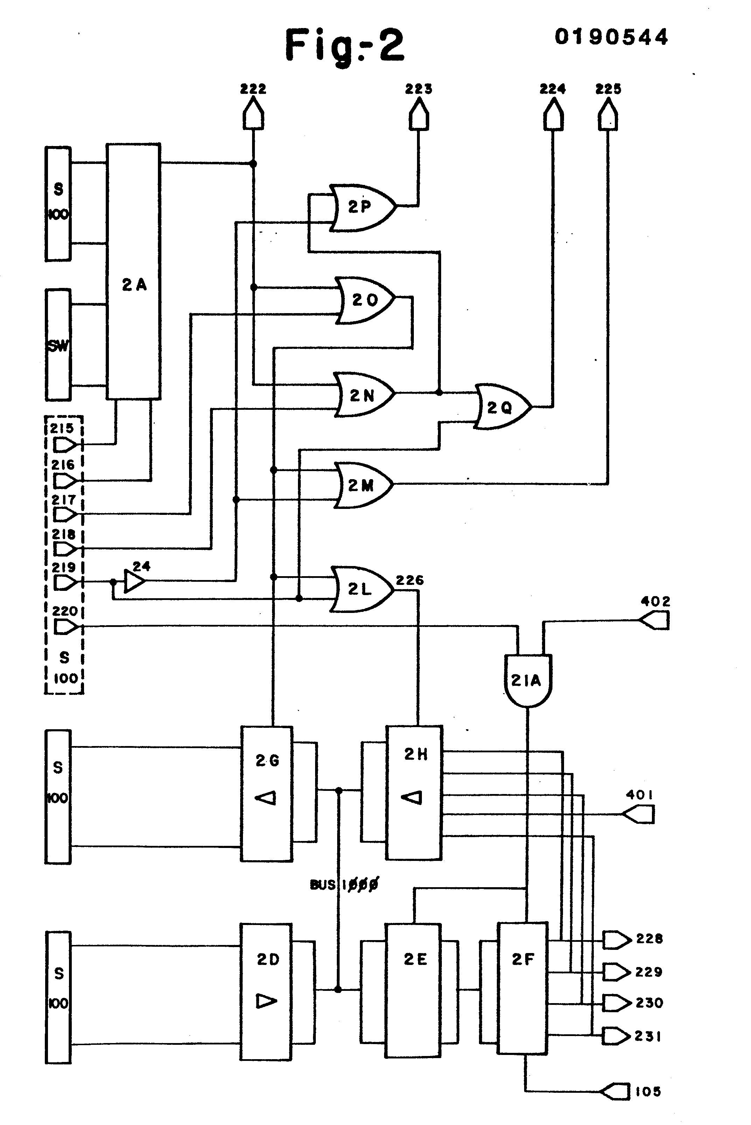

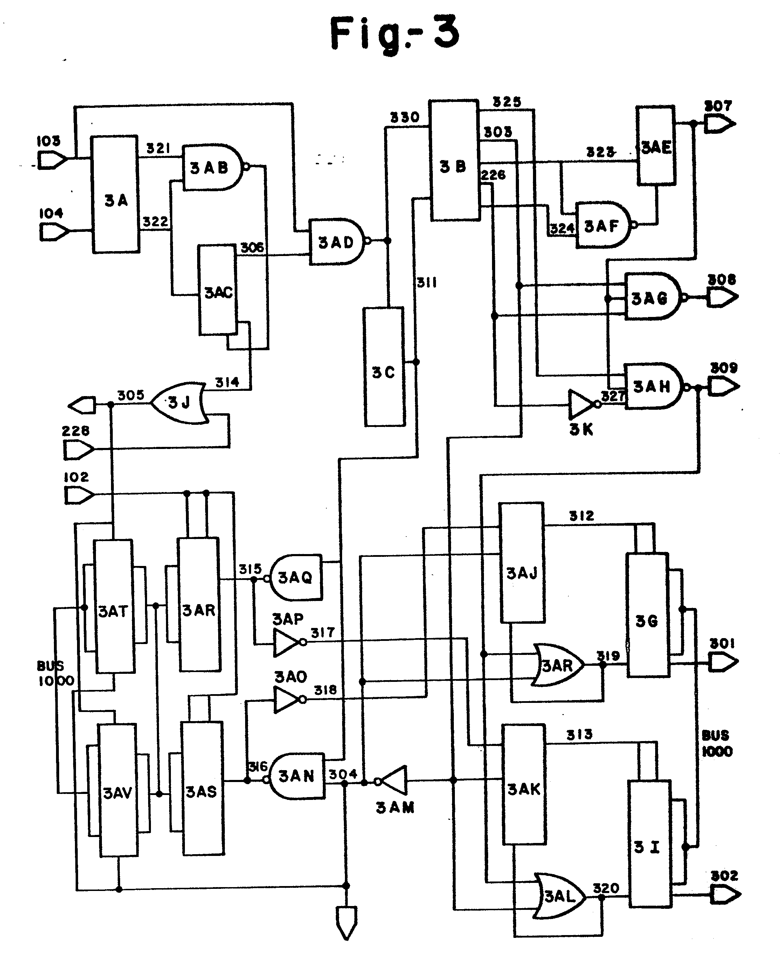

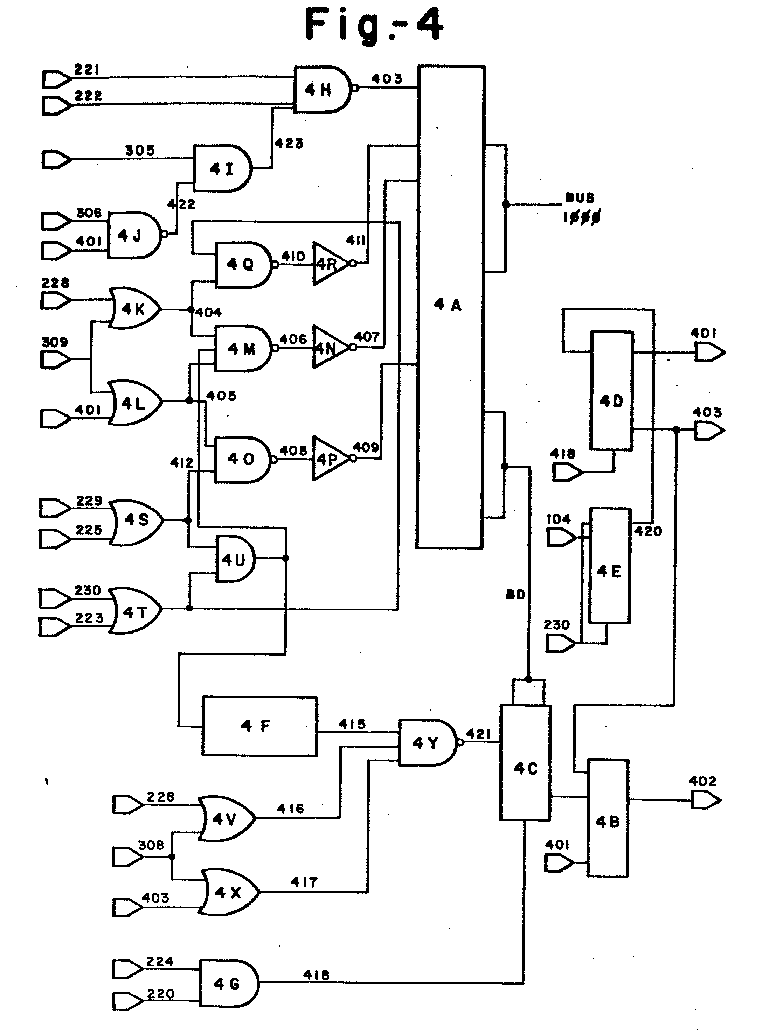

C'est ainsi que la figure 1 représente le circuit numéro 1, at ainsi de suite jusqu'à la figure 4, qui correspond au circuit numéro 4. Au vu des figures, on observe que le système préconisé, en ce qui concerne le circuit 1, se base sur un amplificateur de haute fréquence s'alimentant au moyen du signal d'entrée 101. Cet amplificateur dispose d'un potentiomètre de réglage R1 branché entre la tension VP et la terre grâce auquel l'on parvient à amplifier la zone ou plage du signal 101 contenant l'information de vidéo.

L'amplification du circuit 1A est fixe et permet d'obtenir un signal effectif 110 beaucoup plus grand que celui fourni par la caméra de vidéo qui est typiquement de 0,5 volts.

La tension réglée VP s'obtient par l'intermédiaire d'un régulateur intégré REG 1, à partir de la tension 107 fournie par le BUS S 100.

Le signal 110 est envoyé au circuit analogico-digital 1B, constitué par un amplificateur opérationnel réalimenté par la résistance R8. La sensibilité de ce circuit est réglée au moyen de la résistance de réglage R7 qui contrôle la sensibilité de la digitalisation, en obtenant comme résultat le signal 102 qui s'avère ainsi approprié pour être accepté par le circuit de saisie de données.

Le signal 101 alimente en outre le circuit séparateur de synchronismes 1C qui extrait les signaux 103 et 104 du signal de vidéo d'entrée, les deux étant utilisés pour synchroniser le fonctionnement du système.

Le circuit bistable 1B reçoit le signal 104 engendrant le signal 105 utilisé pour synchroniser l'admission de commandes au système.

Le circuit 1, outre le traitement du signal d'entrée 101, contient ceux de sortie pour l'affichage de l'image. Les signaux 301 et 304 se combinent à la porte 1E en créant le signal 112 qui, conjointement avec le signal 113 provenant des signaux 302 et 303 traités à la porte 1H, se combinent à leur tour à la porte II, en engendrant à ce point le signal de vidéo digital 111 traité à la porte 1J avec le signal 401 d'habilitation de vidéo en formant ainsi le signal de vidéo digital 109. Les signaux 306 et 307 se combinent à la porte 1F en donnant pour résultat le signal 108 d'empaquetage de l'image de vidéo.

L'amplificateur 1G reçoit le signal 109 par l'intermédiaire de la résistance R2 et le signal 108 par l'intermédiaire de la résistance R3, en même temps le signal 103 se mélange aux précédents à l'entrée de l'amplificateur de vidéo 1G par l'intermédiaire de la diode D1 en formant ainsi le signal complet 102. L'amplificateur 1G est branché à la tension continue et réglée d'alimentation VC et donne comme sortie un signal 106, à partir du signal 112, approprié pour alimenter un moniteur de télévision sur lequel va s'effectuer l'affichage de l'image graphique digitale.

Le circuit 2 consiste en un interface d'entrée sortie pour remplir les spécifications du BUS S 100 et, sans préjudice de pouvoir introduire des interfaces pour les divers bus conducteurs standardisés sur le marché, l'on montre ici la réalisation pratique de l'interface pour BUS S 100.

La sélection est réalisée en utilisant les lignes d'adresse du BUS en les comparant à l'état d'un groupe d'interrupteurs (SW) de sélection d'adresse. Le circuit 2A est un comparateur utilisant les lignes d'adresse précitées et les bits sélectionnés en SW conjointement avec les signaux 215 et 216 pour donner à la sortie une impulsion de sélection lorsqu'est réalisée une activité d'adressage de la part de l'ordinateur central.

En fonction de l'état de la ligne d'adresse la plus basse et des lignes 217 et 218, on déduit les signaux 223 au moyen de la porte 2E, 224 au moyen de la porte 2U, 225 au moyen de la porte 2M et 226 au moyen de la porte 2L, configurant l'opérativité du système. Les commandes du système sont synchronisées au moyen du signal 402 provenant du circuit 1 et sont stockées au moyen des registres 2E et 2F qui sont effacés au moyen de la porte 21A combinant les signaux 402 et 220.

Le signal 226 permet l'habilitation des deux circuits transcepteurs 2G et 2H fournissant à l'ordinateur l'information sur l'état dans lequel se trouve le système par l'intermédiaire de la connexion 100.

Les deux circuits sont connectés au bus 1000. Le circuit 2H prend les signaux 401, 228, 229, 230 et 231, comme information de l'état de l'exécution de commandes et informe l'ordinateur au moyen d'eux.

Le signal 221 s'obtient de l'horloge accessoire du BUS et a une fréquence de 2MHZ, et est utilisé sur le circuit 4 pour réaliser le rafraîchissement de la mémoire. Le circuit 2B est un transcepteur d'entrée permettant l'entrée de données de la connexion 100 au bus d'image 1000.

Le contrôle du nombre de lignes compté par le circuit 3A est réalisé

- 6 -

par le bistable ou flip-flop 3AC mettant en marche, au moyen du signal 322, la porte 3AB dont la sortie est connectée à l'entrée de RESET du flip-flop 3AC et l'arrêtant lorsqu'est atteint le nombre de lignes programmé par les signaux 321 et 322.

Le signal 306 ouvre ou barre le passage du signal 103 converti en signal 330 et 3AT par la combinaison du 103 et du 306, jusqu'aux circuits 3B et 3C, en permettant ainsi ou en arrêtant le processus de comptage de points. Ce compteur 3A contrôle, au moyen du signal 330, un circuit oscillateur classique 3C utilisé comme référence pour compter les points d'image saisis dans chacune des lignes effectives.

La sortie de cet oscillateur alimente le signal 330 au compteur de points 3B.

Le contrôle du nombre de points comptés est réalisé par le flip-flop 3AE mettant en marche, au moyen du signal 323, la porte 3AF dont la sortie est connectée à l'entrée de RESET de 3AE et l'arrêtant lorsqu'est atteint le nombre de points programmé par les signaux 323 et 324.

La porte 3AG utilise les signaux 325, 326 et 307 pour engendrer le signal 308 et la porte 3AH utilise les signaux 325, 307 et 327 engendrés du 326 par l'inverseur 3H pour engendrer le signal 309.

Les signaux 308 et 309 sont utilisés comme synchronismes sur le circuit de gestion de mémoire.

La sortie de l'oscillateur 311 alimente également les portes 3AQ en y combinant le signal 303 pour produire le signal 315 par l'intermédiaire de la porte 3AN, en y combinant le signal 304 pour produire le signal 316. Les signaux 315 et 316 sont connectés aux entrées de déplacement des registres de déplacement 3AR et 3AS qui parviennent ainsi à déplacer synchroniquement le signal 102 reçu du circuit 1.

La sortie de l'image saisie par les registres de déplacement s'effectue au bus d'image signal 1000 au moyen des circuits de transfert 3AT et 3AU, tous deux contrôlés par le signal 305 provenant du même circuit 3 et obtenu par l'intermédiaire de la porte 3J à partir du signal 314 et du signal 228. L'autre signal du contrôle 304 provient de 303 par l'intermédiaire de l'inverseur 3AM. Le signal 315 est converti en 317 par l'inverseur 3AB et le 316 et le 318 par l'inverseur 3AO.

Le signal 317 s'alimente au circuit compteur module 7-3AK et, conjointement avec les signaux 320 et 303, permet le passage du signal 313 formé par des groupes de sept impulsions au registre de déplacement 3I. Ce registre 3I reçoit en outre le signal du contrôle 320 obtenu par l'intermédiaire de la porte 3AL des signaux 309 et 303.

Le registre 3I est en outre connecté au BUS 1000 par où il reçoit les données et produit la sortie 302.

Le signal 318 s'alimente au circuit compteur module 7-3AJ et, conjointement avec les signaux 319 et 304, permet le passage du signal 312 formé par des groupes de sept impulsions au registre de déplacement 3G. Ce registre 3G reçoit en outre le signal de contrôle 319 obtenu par l'intermédiaire de la porte 3AR des signaux 309 et 304. Le registre 3G est en outre connecté au BUS 1000 par où il reçoit les données de l'image et produit la sortie 301.

Le circuit 4 comprend tous les éléments de gestion de la mémoire. Cette mémoire est constituée par un circuit de mémoire 4A de lecture et d'écriture.

Le signal 306 se combine au 401 en 4J pour produire le signal 422, ledit signal se combinant à son tour au 305 et 4I en produisant le signal 423, qui se combine à son tour en 4H avec les signaux 221 et 222 pour engendrer le signal 403 qui est utilisé pour le rafraîchissement du circuit de mémoire.

Le signal 228 se combine en 4K avec le signal 309 en produisant ainsi le signal 404. Le signal 230 et le 223 se combinent en 4T pour produire le 413 qui, conjointement avec le 404, produisent en 4Q le 410.

Le signal 410 averti par 4R se convertit en signal 411 qui constitue le contrôle d'écriture dans la mémoire.

Le signal 404 et le 405, produit par 4L à partir du signal 403 et du signal 309, se combinent avec le signal 414 en 4M pour produire le signal 406 qui s'invertit en 4N pour engendrer le signal 407 de contrôle de la mémoire.

Le signal 229 se combine en 4S avec le signal 225 et produit le signal 412. Le signal 230 se combine en 4T avec le signal 223 et produit le signal 413.

Le signal 412 se combine en 4U avec le signal 413 et produit le signal 414.

Le signal 308 se combine en 4V avec le signal 228 et produit le signal 416. Le signal 308 se combine en 4X avec le signal 403 et produit le signal 417. Le signal 405 se combine en 4O avec le signal 412 pour produire le signal 409 qui constitue le signal d'habilitation de mémoire.

Le signal 414 est déphasé dans le temps au moyen du circuit retardeur 4F et produit ainsi le signal 415 qui se combine en 4Y avec 416 et 417 pour engendrer le signal 421 d'avance ou défilement du circuit compteur 4C engendrant les adresses de sélection de la mémoire. Ce compteur 4C reçoit en outre le signal d'effacement 418 obtenu en 4G à partir du signal 224 et du signal 220. La sortie effective du compteur est un ensemble de lignes d'adresse BD alimentant le circuit de mémoire 4A.

Le circuit bistable 4E reçoit à son entrée d'horloge le signal 104 et aux entrées de RESET et de donnée le signal 230, moyennant cette disposition le signal 420 engendre une horloge engendrant automatiquement une impulsion de charge pour le bistable 4D qui se met en marche en habilitant le signal 401 lorsque prend fin l'écriture d'une image sur le circuit. Le bistable 4D engendre le signal 401 et son inverse le 403 et est éteint par le signal 418. Le circuit 4A est connecté au bus 1000 d'où il prend et reçoit l'information de l'image à lire ou enregistrer, contrôlé par les signaux 403, 411, et 409.

En définitive, le système part de l'image de vidéo fournie par une caméra de télévision basée sur un tube électronique sensible du genre vidicon. Cette caméra peut être n'importe laquelle fournissant un signal d'un volt de crête à crête de format CCIR entrelacé 2:1 à 625 lignes par image.

Le système préconisé permet en tant que caractéristique fondamentale d'utiliser les mêmes circuits qui sont utilisés pour effectuer la digitalisation de l'image, pour l'affichage sur un moniteur monochrome remplissant les normes C.C.I.R.

Le système réagit comme un périphérique aux commandes de contrôle de façon autonome, en libérant ainsi l'ordinateur central de travaux superflus.

La forme, les dimensions et les matériels pourront varier, de même qu'en général tout ce qui soit accessoire ou secondaire, dans la mesure où ne soit ni altérée, ni changée, ni modifiée l'essence de l'objet décrit.

Les termes utilisés pour la rédaction de ce mémoire sont certains et constituent un reflet fidèle de l'objet décrit et l'on doit toujours les prendre dans leur sens le plus large et jamais de façon limitative.

Les pétitionnaires se réservent le droit d'obtenir des certificats d'addition complémentaires pertinents pour les améliorations ou perfectionnements pouvant être recommandés à l'avenir par la pratique.

Revendications

1. Système de traitement digital et d'affichage d'images permettant la digitalisation d'une image provenant d'une caméra de vidéo et sa traduction en information digitale lisible par un ordinateur, l'écriture d'une image envoyée par l'ordinateur à un circuit pour en réaliser l'affichage sur un moniteur de télévision, se caractérisant essentiellement par le fait d'être constitué par l'association fonctionnelle d'un circuit de digitalisation et d'affichage, d'un circuit de contrôle, d'un circuit de gestion de mémoire et d'un interface d'entrée/sortie.

2. Système de traitement digital et d'affichage d'images, selon la revendication 1, se caractérisant en ce que le circuit de digitalisation et d'affichage est constitué par un amplificateur de haute fréquence et un convertisseur analogique digital, avec la collaboration d'un circuit séparateur de synchronismes, assistés par des amplificateurs, et tel qu'il permet le traitement du signal d'entrée et l'affichage de l'image.

3. Système de traitement digital et d'affichage d'images, selon les revendications précédentes, caractérisé en ce que le circuit de gestion de mémoire est constitué par des mémoires du genre lecture/écriture (RAM) incorporant les éléments nécessaires pour réaliser les opérations lecture et/ou écriture.

4. Système de traitement digital et d'affichage d'images, selon les revendications précédentes, caractérisé en ce que le circuit de contrôle est constitué par l'association fonctionnelle d'un compteur de lignes, d'un oscillateur et d'un compteur module, avec la collaboration de registres de déplacement pour l'adaptation des signaux.

- 12 -

5. Système de traitement digital et d'affichage d'images, selon les revendications précédentes, caractérisé en ce que l'interface d'entrée/sortie incorpore les éléments transcepteurs permettant l'entrée et la sortie de données à l'ordinateur en fonction de l'état d'un système d'interrupteurs de sélection d'adresses.

6. Système de traitement digital et d'affichage d'images, selon les revendications précédentes, caractérisé en ce que l'alimentation du système se réalise par l'intermédiaire d'une tension réglée au moyen d'un régulateur intégré.

7. Système de traitement digital et d'affichage d'images tel que décrit de façon substantielle tout au long du présent mémoire et sur les dessins ci-joints.

# Fig.-1

# Fig:2

0190544

Fig.-3

0190544

Fig.-4

4/4

0190544